# EUROPEAN PATENT SPECIFICATION

(11) **EP 0 758 529 B1**
(45) Date of publication and mention of the grant of the patent: **18.04.2001**
(21) Application number: 95202190.5
(22) Date of filing: 11.08.1995
(51) Int. Cl.: A23L 1/0532, A23L 1/064, A23L 1/314

(54) **A process for recombining food with controlled gelation**
Verfahren zur Nahrungsmittelumstrukturierung mit Kontrolle des Gelierens
Méthode pour préparer des aliments reconstitués avec contrôle de la gélification

(43) Date of publication of application: 19.02.1997
(73) Proprietor: SOCIETE DES PRODUITS NESTLE S.A., 1800 Vevey (CH)
(72) Inventor: Trueck, Hans Uwe, D-70499 Stuttgart (DE); Isse, Mohamed Giama, D-76185 Karlsruhe (DE)
(74) Representative: Thomas, Alain

(56) References cited:
- FR-A- 2 462 105
- US-A- 2 441 729

## Description

The invention concerns a process for recombining food with controlled gelation, wherein an alginate-calcium aqueous phase is mixed with a food phase in the form of purée.

Vegetable pieces in some culinary products become too soft for a good texture, the cause being osmotic dehydration of the vegetable in the fluid phase of the culinary product. A solution to this problem is to recombine the vegetable. This solution has the advantage that the texture of recombined vegetables could be engineered.

There are a number of patents describing the process of food recombination, using alginate-calcium gelling reaction.The calcium ions become available for the gelling reaction only at the acid range of the pH , so that addition of certain compounds are necessary to lower the pH. The DE-Patent No. 3028371 concerns already a process for the gelation of vegetable products with a combination of a calcium salt with an alginate. To prolong the gelling time, different sugars (as furanose or pyranose ring systems) and alcohols (as ethanol, isopropanol, glycol) are added to the formulation. The drawback of this solution is that the pH condition at which the gelling reaction takes place is not well enough controlled , so that it is not possible to know with good certainty the gelling time. Secondly, the addition of alcohol and sugars causes undesirable taste for recombined vegetables in culinary products.

The aim of the present invention is to find a process for recombining food, wherein it is possible to reach a quantitative control of the pH and thus a better adjustment of the gelling time, without any negative consequence on the taste of the obtained recombined food.

The invention concerns a process for recombining food with controlled gelation, wherein an alginate-calcium aqueous phase is mixed with a food phase in the form of purée and prior to the mixing, the food phase in the form of pieces is conditioned with a brine containing acetic acid, the brine is separated and the food phase is pureed, said food phase having a pH of not less then 3.4.

The type of the food phase is not critical. This phase is either a vegetable phase, a fruit phase or a meat phase. In the case of a vegetable phase, the application has been already mentioned above. In the case of fruit, the recombined fruit can be used for desserts or in yoghurts. In the case of meat, the recombined phase can be used in the petfood area.

The brine is used to condition the food to be recombined and the process of the invention has following advantages : The brine brings an acidulous taste, which is desired in the case of vegetable pieces for culinary products. Secondly, acetic acid is a compound very largely used in the area of culinary products and will never be submitted to a food regulation restriction. Finally, the process of the invention gives the possibility to reduce or possibly not to use at all the sequestrants , such as sodium citrate or sodium phosphate.

The problem of really being sure of the gelling time is an important factor, because of the necessity on a production line,according to the specificity of said line, to know how much time is available for having the gelation and accordingly execute the process in conformity with the present invention.

If only acetic acid is added to the brine, the mixture with the food phase has a pH of approximatively 3.7-3.9. It is also possible according to the invention, to raise the pH by addition of sodium acetate. With this addition, the calcium ions are still available for the reaction of gelation and the system acetic acid with sodium acetate enables a good control of the kinetics of the gelling reaction.

The concentration in the brine of the acetic acid and of the sodium acetate is critical. Preferably, the brine contains from 0.5 to 4 % acetic acid and from 0 to 3 % sodium acetate according to the desired pH level which influences the kinetic of the gelling reaction. The concentration of the acetic acid to that of sodium acetate enables a good control of the pH and thus the concentration of the calcium ions in the system. For example a high pH level causes a low calcium ions concentration and thus a longer gelling time, a low pH level causes a high calcium concentration and thus a shorter gelling time. A high pH level is achieved when the concentration of acetic acid to that of sodium acetate is low. Throughout the specification , all the percentages are given in weight.

The type of treated vegetable can be in the whole range of existing vegetables, more specifically cucumber, pea , carrot, tomato, potato.

The way of preparing the food pieces for the recombination process is as follows. The food (vegetable, fruit or meat) is cut into pieces of a not critical size, but generally in the range of 3 to 7 mm, and mixed with the brine containing vinegar ( between 0.5 and 4 % acetic acid) and sodium acetate according to the desired pH value.

The sodium acetate could be added to the brine with the vinegar, when cutting the food into pieces or just before the preparation of the food phase for the recombination or directly to the food phase. The ratio between the food phase and the brine is comprised between 2:1 and 5:1, preferably this ratio is 3:1.

The conditioning of the vegetable phase takes between 4 hours and one week. An additional advantage of such preparation is that the food could be conserved in the brine for a long time prior to the mixing with the alginate phase.

The pH of the food phase is comprised between 3.7 and 6.0. As explained more in detail with reference to the examples, if the pH increases, the gelling time also increases.

After the treatment with the brine, the food pieces are drained or eventually washed. The adsorbed vinegar during the conditioning of the vegetable phase is retained by quick washing. The food phase is then pureed by means of food grinding machine.

Binding agents, such as sugars (mono-, di- or polysaccharides) or xanthan can also be added to the food phase and mixed. In the case of the addition of polysaccharides, a too high viscosity of the mixture should be avoided by using a relatively low amount of said polysaccharides for example on the range between 0 and 30 %.

The alginate phase is prepared in the following way. Solid sodium alginate, calcium phosphate, natrium phosphate and sugars (mono-, di- or polysaccharides) or xanthan are thoroughly dry blended together and then dispersed into water. This mixture is stirred until the dry ingredients are dissolved. The use of the natrium phosphate is important when the alginate phase is prepared in tap water containing calcium ions. The calcium ions in the tap water could cause premature gelling of the alginate phase. The calcium source used is preferably calcium phosphate. At neutral pH, the calcium ions are not available for the gelling reaction.

The alginate phase contains between 1.5 and 2.5 % sodium alginate and between 1 and 2 % calcium phosphate. The content of sugar is comprised between 5 and 15 %.

The food phase is then added to the alginate phase under rapid mixing and then allowing the mixture to gel under shear-free conditions. The ratio of the alginate-calcium phase to the vegetable phase is comprised between 1:1 and 2:1 according to the desired gel strength.

The rate at which the calcium is made available to the alginate depends primarely on the pH level. Good gel strength can be obtained within 30 seconds to 5 minutes according to the level of the pH.

The pH level is controlled by means of the concentration ratio of the sodium acetate to that of vinegar. The pH level is chosen in relation to the desired concentration of free calcium ions in the system, so that negligible gelation occurs before the establishment of the shear-free conditions. In practice, this means that the formulation with defined pH level is designed to give a chosen final gelling time,e. g. less than one minute, or as little as 5 minutes and the residence time in the mixing apparatus chosen so that mixing is complete before gelation occurs.

After the gelation corresponding to the recombination of the vegetable, the gelled portions are cut to the desired form and size and mixed in the culinary product, as mayonnaise, remoulade, to the desired ratio level.

The following examples describe more precisely the process of the present invention.

### Example 1.

The alginate phase is prepared by mixing together the compounds of following table.

| Compounds | grams | percentage |
|---|---|---|
| Sodium alginate | 5 | 2.2 |
| CaHPO4 | 2.5 | 1.10 |
| Na2HPO4 | 0.14 | 0.06 |
| sucrose | 12.5 | 5.52 |
| dextrose | 12.5 | 5.52 |
| water | 194 | 85.6 |

For the preparation of the vegetable phase, cucumber pieces of the dimension of about 6.6.6 mm are conditioned in a brine containing 2 % of acetic acid. The ratio between the cucumber pieces and the brine is 3:1. The cucumber pieces are washed and then pureed by means of a food grinding machine. The cucumber puree has a pH of 3.8.
This puree is then mixed to obtain a vegetable phase according to following table.

| Compound | grams | percentage |
|---|---|---|
| cucumber puree | 167.6 | 69.08 |
| sucrose | 50 | 20.61 |
| dextrose | 25 | 10.30 |
| sodium acetate | 0.03 | 0.01 |

The alginate and the vegetable phases are mixed in a 1:1 ratio and then the system is allowed to gel in shear-free condition. The gelling time is about 5 seconds and could be adjusted according to the requirement of the producing plant by increasing or decreasing the pH.

The final gel has the following composition :

| Compound | percentage |
|---|---|
| sodium alginate | 1.103 |
| CaHPO4 | 0.552 |
| Na2HPO4 | 0.03 |
| water | 42.81 |
| cucumber puree | 34.5 |
| sucrose | 13.1 |
| dextrose | 7.9 |
| sodium acetate | 0.005 |

### Examples 2 to 7.

The alginate phase is prepared by mixing together the compounds of following table :

| compound | grams | percentage |
|---|---|---|
| sodium alginate | 4.66 | 1.85 |
| CaHPO4 | 3.55 | 1.41 |
| Na2HPO4 | 0.22 | 0.09 |
| sucrose | 25.00 | 9.90 |
| dextrose | 25.00 | 9.90 |
| water | 194 | 76.85 |

The conditioned vegetable phase is prepared according to preceding example with following composition :

| Compound | grams | percentage |
|---|---|---|
| cucumber puree | 512 | 69.38 |
| sucrose | 151 | 20.46 |
| dextrose | 75 | 10.16 |

From this cucumber phase, portions of cucumber puree with different pH levels are prepared by adding natrium acetate. The alginate phase is mixed with the vegetable phase in a ratio of 1.3:1 and each mixture is allowed to gel in shear-free condition. Different gelling times are observed for the different mixtures, as shown in the following table.

| Example | puree/g | Na-acetat/g | pH | Gelling time /s |
|---|---|---|---|---|
| 2 | 59.2 | 0 | 3.74 | 5 |
| 3 | 62.6 | 0.13 | 4.29 | 10 |
| 4 | 61.5 | 0.30 | 4.63 | 20 |
| 5 | 63.0 | 0.60 | 4.87 | 25 |
| 6 | 60.2 | 1.05 | 5.12 | 30 |
| 7 | 60.5 | 3.00 | 5.70 | 120 |

### Examples 8 to 12.

The alginate phase is prepared as in the preceding examples, with the exception that the amount of Na2HPO4 used is 0.50 g, instead of 0.22 g.

The cucumber phase and the different portions of the cucumber puree are prepared as in the preceding examples. The alginate phase is mixed with the vegetable phase at a ratio of 1.3:1 and each mixture is then allowed to gel in shear-free condition. The observed gelling time and the pH of the cucumber puree portions are shown in the following table :

| Example | puree /g | Na-acetat/g | pH | gelling time /s |
|---|---|---|---|---|
| 8 | 59.2 | 0 | 3.74 | 20 |
| 9 | 62.6 | 0.13 | 4.29 | 25 |
| 10 | 61.5 | 0.30 | 4.63 | 35 |
| 11 | 63.0 | 0.60 | 4.87 | 55 |
| 12 | 60.2 | 1.05 | 5.12 | 70 |

### Example 13.

The alginate phase is prepared as in examples 2 to 7. The cucumber phase is prepared as in these examples, with the exception that no sugar is used. The cucumber puree and the alginate phase are mixed in a ratio of 1.3:1 and the system is then allowed to gel in shear free condition. The gelling time is about 20 seconds. No sodium acetate is used in this example.

In each of the above examples, a strong gel is achieved. For the gels prepared at pH above 5, the maximum gel strength is reached after about one hour and for the gels at pH below 5, in few minutes.

## Claims

1. A process for recombining food with controlled gelation, wherein an alginate-calcium aqueous phase is mixed with a food phase in the form of purée, characterised in that prior to the mixing, the food phase in the form of pieces is conditioned with a brine containing acetic acid, the brine is separated and the food phase is pureed, said food phase having a pH of not less than 3.4.

2. A process according to claim 1, characterized in that the food phase is taken in the group consisting of a vegetable phase, a fruit phase and a meat phase.

3. A process according to claims 1 or 2, characterised in that the brine contains further sodium acetate.

4. A process according to any of claims 1 to 3, characterised in that the brine contains from 0.5 to 4 % acetic acid and from 0 to 3 % sodium acetate.

5. A process according to any of claims 1 to 4, characterised in that the ratio of the vegetable phase to the brine is comprised between 2:1 and 5:1.

6. A process according to any of claims 1 to 5, characterised in that the ratio of the alginate-calcium phase to the vegetable phase is comprised between 1:1 and 2:1.

7. A process according to any of claims 1 to 6, characterised in that the conditioning of the vegetable phase takes between 4 hours and one week.

8. A process according to any of claims 1 to 7, characterised in that the alginate-calcium phase contains between 1.5 and 2.5 % sodium alginate and between 1 and 2 % calcium phosphate.

9. A process according to any of claims 1 to 8, characterised in that the vegetable is chosen from the group consisting of cucumber, pea, carrot, tomato

10. A process according to any of claims 1 to 9, characterised in that the pH of the conditioned vegetable phase is comprised between 3.7 and 6.0.

11. A process according to any of claims 1 to 10, characterised in that the vegetable phase and the alginate-calcium phase contain a binding agent, such as sugars or xanthan.

12. A process according to claim 1 to 11, characterised in that the vegetable phase contains between 0 and 30 % of sugar and the alginate-calcium phase between 5 and 15 % sugar.

## Patentansprüche

1. Verfahren zum Rekombinieren eines Nahrungsmittels unter gesteuerter Gelierung, bei dem eine wäßrige Alginat-Calcium-Phase mit einer Nahrungsmittelphase in Form eines Pürees vermischt wird, **dadurch gekennzeichnet,** daß die Nahrungsmittelphase in Form von Stücken vor dem Vermischen mit einem Aufguß konditioniert wird, der Essigsäure enthält, der Aufguß abgetrennt wird und die Nahrungsmittelphase püriert wird, wobei die genannte Nahrungsmittelphase einen pH von nicht weniger als 3,4 aufweist.

2. Verfahren nach Anspruch 1, dadurch gekennzeichnet, daß die Nahrungsmittelphase aus der Gruppe ausgewählt ist, die aus einer Gemüsephase, einer Fruchtphase und einer Fleischphase besteht.

3. Verfahren nach Anspruch 1 oder 2, dadurch gekennzeichnet, daß der Aufguß außerdem Natriumacetat enthält.

4. Verfahren nach irgendeinem der Ansprüche 1 bis 3, dadurch gekennzeichnet, daß der Aufguß von 0,5 bis 4% Essigsäure und von 0 bis 3% Natriumacetat enthält.

5. Verfahren nach irgendeinem der Ansprüche 1 bis 4, dadurch gekennzeichnet, daß das Verhältnis der Gemüsephase zu dem Aufguß im Bereich zwischen 2:1 und 5:1 liegt.

6. Verfahren nach irgendeinem der Ansprüche 1 bis 5, dadurch gekennzeichnet, daß das Verhältnis der Alginat-CalciumPhase zu der Gemüsephase im Bereich zwischen 1:1 und 2:1 liegt.

7. Verfahren nach irgendeinem der Ansprüche 1 bis 6, dadurch gekennzeichnet, daß das Konditionieren der Gemüsephase zwischen 4 Stunden und einer Woche dauert.

8. Verfahren nach irgendeinem der Ansprüche 1 bis 7, dadurch gekennzeichnet, daß die Alginat-Calcium-Phase zwischen 1,5 und 2% Natriumalginat und zwischen 1 und 2% Calciumphosphat enthält.

9. Verfahren nach irgendeinem der Ansprüche 1 bis 8, dadurch gekennzeichnet, daß das Gemüse ausgewählt ist aus der Gruppe, die aus Gurke, Erbse, Karotte, Tomate besteht.

10. Verfahren nach irgendeinem der Ansprüche 1 bis 9, dadurch gekennzeichnet, daß der pH der konditionierten Gemüsephase zwischen 3,7 und 6,0 liegt.

11. Verfahren nach irgendeinem der Ansprüche 1 bis 10, dadurch gekennzeichnet, daß die Gemüsephase und die Alginat-Calcium-Phase ein Bindemittel, wie beispielsweise Zucker oder Xanthan enthalten.

12. Verfahren nach Anspruch 1 bis 11, dadurch gekennzeichnet, daß die Gemüsephase zwischen 0 und 30% Zucker und die Alginat-Calcium-Phase zwischen 5 und 15% Zucker enthält.

## Revendications

1. Procédé pour la recombinaison d'un aliment, avec une gélification contrôlée, dans lequel une phase aqueuse d'alginate-calcium est mélangée à une phase d'aliment sous forme d'une purée, caractérisé en ce qu'avant le mélange la phase d'aliment sous forme de morceaux est conditionnée avec une saumure contenant de l'acide acétique, la saumure est séparée et la phase d'aliment est réduite en purée, ladite phase d'aliment ayant un pH non inférieur à 3,4.

2. Procédé suivant la revendication 1, caractérisé en ce que la phase d'aliment est choisie dans le groupe consistant en une phase de légume, une phase de fruit et une phase de viande.

3. Procédé suivant la revendication 1 ou 2, caractérisé en ce que la saumure contient en outre de l'acétate de sodium.

4. Procédé suivant l'une quelconque des revendications 1 à 3, caractérisé en ce que la saumure contient 0,5 à 4 % d'acide acétique et 0 à 3 % d'acétate de sodium.

5. Procédé suivant l'une quelconque des revendications 1 à 4, caractérisé en ce que le rapport de la phase de légume à la saumure est compris dans l'intervalle de 2:1 à 5:1.

6. Procédé suivant l'une quelconque des revendications 1 à 5, caractérisé en ce que le rapport de la phase d'alginate-calcium à la phase de légume est compris dans l'intervalle de 1:1 à 2:1.

7. Procédé suivant l'une quelconque des revendications 1 à 6, caractérisé en ce que le conditionnement de la phase de légume demande un temps de 4 heures à une semaine.

8. Procédé suivant l'une quelconque des revendications 1 à 7, caractérisé en ce que la phase d'alginate-calcium contient 1,5 à 2,5 % d'alginate de sodium et 1 à 2 % de phosphate de calcium.

9. Procédé suivant l'une quelconque des revendications 1 à 8, caractérisé en ce que le légume est choisi dans le groupe consistant en le concombre, les pois, les carottes et les tomates.

10. Procédé suivant l'une quelconque des revendications 1 à 9, caractérisé en ce que le pH de la phase de légume conditionnée est compris dans la plage de 3,7 à 6,0.

11. Procédé suivant l'une quelconque des revendications 1 à 10, caractérisé en ce que la phase de légume et la phase d'alginate-calcium contiennent un liant, tel que des sucres ou la gomme xanthane.

12. Procédé suivant les revendications 1 à 11, caractérisé en ce que la phase de légume contient 0 à 30 % de sucre et la phase d'alginate-calcium contient 5 à 15 % de sucre.
